**Europäisches Patentamt**

**European Patent Office**

**Office européen des brevets**

(19)

(11) Veröffentlichungsnummer: **0 208 091**
**B1**

(12)

# EUROPÄISCHE PATENTSCHRIFT

(45) Veröffentlichungstag der Patentschrift:
**13.07.88**

(51) Int. Cl.⁴: **F 16 D  65/60**

(21) Anmeldenummer: **86106628.0**

(22) Anmeldetag: **15.05.86**

(54) Einrichtung zur selbsttätigen Nachstellung des Betätigungsgestänges von Bremsen.

(30) Priorität: **12.07.85  DE 3524901**

(43) Veröffentlichungstag der Anmeldung:
**14.01.87 Patentblatt 87/3**

(45) Bekanntmachung des Hinweises auf die Patenterteilung:
**13.07.88 Patentblatt 88/28**

(84) Benannte Vertragsstaaten:
**DE FR GB IT SE**

(56) Entgegenhaltungen:
**EP - A - 0 030 766**
**EP - A - 0 055 895**
**EP - A - 0 115 960**
**EP - A - 0 154 799**
**DE - A - 1 475 516**
**DE - A - 2 605 372**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Reinecke, Erich, Dipl.-Ing., Kastanieneck 6, D-3167 Burgdorf (Beinhorn) (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

## Beschreibung

Die Erfindung betrifft eine Einrichtung zur selbsttätigen Nachstellung des Betätigungsgestänges von Bremsen gemäss dem Oberbegriff des Patentanspruchs 1.

Eine derartige, aus der EP-A1-0 030 766 bekannte Einrichtung besteht im wesentlichen aus einem mit der Bremswelle eines Fahrzeugs formschlüssig verbundenen Schneckenrad, welches mit einer Schneckenwelle in Eingriff steht, die ihrerseits in einem auf der Bremswelle angeordneten Gehäuse eines Schwenkhebels angeordnet ist. Eine ebenfalls im Gehäuse des Schwenkhebels angeordnete Verstelleinrichtung mit integriertem Leerhub steht in Relation zu einem Ausschlag des Schwenkhebels, der dem Leerweg des Bremsbelages von der Ausgangsstellung bis zum Anliegen des Bremsbelages an die Bremstrommel proportional zugeordnet ist. Ab einem vorgegebenen Leerhub der Verstelleinrichtung, z. B. bei Verschleiss des Bremsbelages, wird die Schneckenwelle des Schneckengetriebes durch die Verstelleinrichtung über eine Freilaufeinrichtung verdreht. Hierdurch wird der Schwenkhebel um die Achse der Bremswelle verstellt, derart, dass ein Betätigungsorgan, z. B. ein Bremszylinder entsprechend des Verschleisses des Bremsbelages in eine neue Ausgangsstellung relativ zur Bremswelle gebracht wird. Zwecks Justierung der Einrichtung wird die Schneckenwelle von Hand verstellt, bis der mit der Schneckenwelle verbundene Schwenkhebel auf der Bremswelle eine Stellung erreicht hat, bei der der Schwenkhebel und das Betätigungsorgan über Montagebohrungen mit einem Bolzen gelenkartig miteinander verbunden werden können. Durch Schwenken des Verstellhebels in Richtung auf den Fixpunkt am Fahrzeug bis zur Leerhubbegrenzung der Verstelleinrichtung ist dann die Winkelstellung des Verstellhebels zum Schwenkhebel festgelegt. Der Verstellhebel wird dann durch eine feste Verbindung am Fixpunkt arretiert. Konstruktiv bedingte Toleranzen der Bremselemente zueinander sind durch eine Korrektur der Lage des Fixpunktes zum Betätigungsgestänge, z. B. durch eine Langlochverbindung ausgleichbar.

Bedingt durch die Anordnung der Verstelleinrichtung im Gehäuse des Schwenkhebels ist bei einer Bewegung des Verstellhebels das Erreichen der Leerhubbegrenzung nur dadurch erkennbar, dass der Verstellhebel einen spürbaren Anschlag im Gehäuse erreicht hat. Der Anschlag des Verstellhebels kann jedoch auch durch unerwünschte Einflüsse, wie z. B. Schwergängigkeit oder einem mechanischen Hindernis in der Einrichtung simuliert sein. Eine solchermassen verfälschte Ausgangsstellung des Schwenkhebels würde dann zu einer Nachstellung des Bremsgestänges führen, die nicht mehr dem Verschleiss des Bremsbelages angepasst ist. Eine extreme Verstellung kann bei Anwendung hoher Bremskräfte eine Deformation oder einen Bruch der schwächsten Stelle der Einrichtung zur Folge haben.

Der Erfindung liegt deshalb die Aufgabe zugrunde, eine Einrichtung der eingangs genannten Art so zu verbessern, dass bei einer Justierung die Einstellung des maximalen Leerhubs des Schwenkhebels in der Ausgangsstellung des Betätigungsorgans zwangsläufig erfolgt und dass eine vorgegebene Winkelstellung des Verstellhebels zum Schwenkhebel in dieser Ausgangsstellung von aussen z. B. visuell oder abtastbar wahrnehmbar ist.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass die Positionierung des Verstellhebels zum Schwenkhebel bei maximalem Leerhub der Verstelleinrichtung nicht unter erschwerten Montagebedingungen am Fahrzeug vorgenommen werden muss, sondern bereits in einer Vormontage erfolgen kann.

Die Erfindung wird anhand eines Ausführungsbeispieles, dass in der Zeichnung dargestellt ist, näher erläutert. Es zeigen:

Fig. 1 eine Einrichtung zur selbsttätigen Nachstellung des Bremsgestänges von Bremsen mit einem am Gehäuse eines Schwenkhebels angeordneten Anschlag für einen Verstellhebel.

Fig. 2 eine Einrichtung nach Fig. 1 mit einem Verstellhebel der mit dem Gehäuse des Schwenkhebels durch einen Bolzen verbunden ist.

Fig. 3 einen Teilschnitt A-A durch die Einrichtung nach Fig. 2.

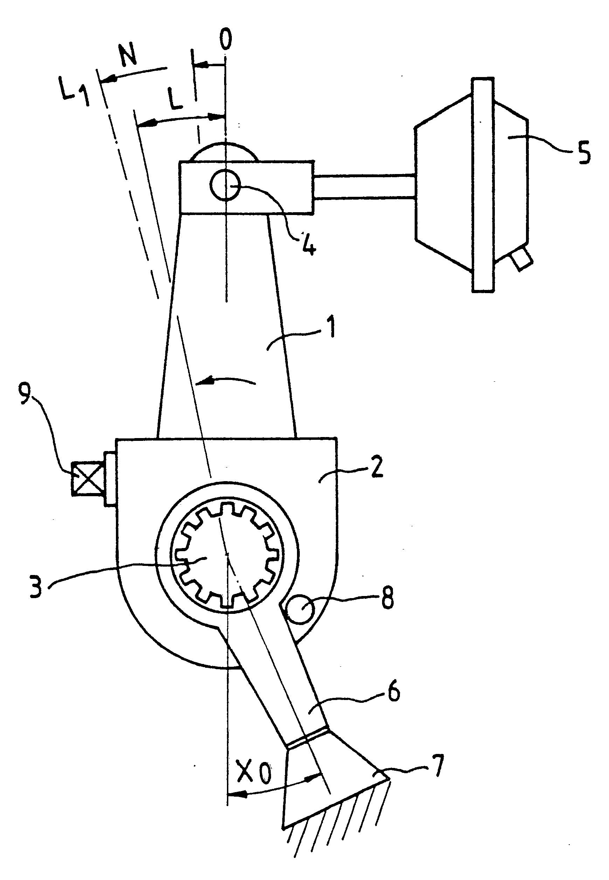

Die Figur 1 zeigt einen Schwenkhebel 1 der mit seinem Gehäuse 2 auf einer Bremswelle 3 eines Bremsgestänges angeordnet ist. Der Schwenkhebel 1 ist über eine Gelenkverbindung 4 mit einem Betätigungsorgan 5, das als Bremszylinder dargestellt ist, verbunden. Ein um die Schwenkachse des Schwenkhebels 1 verschwenkbarer Verstellhebel 5 steht mit einer im Gehäuse 2 angeordneten Verstelleinrichtung in Wirkverbindung. Die Verstelleinrichtung ist mit Begrenzungen für den Verstellhebel 6 versehen, zwischen denen der Verstellhebel 6 in einem Leerhub in zwei Richtungen radial verschwenkbar ist. Die Verstelleinrichtung vermag über ein ebenfalls im Gehäuse 2 angeordnetes Schneckengetriebe, das zwischen der Bremswelle 3 und dem Schwenkhebel 1 wirksam ist, den Schwenkhebel 1 gegenüber der Bremswelle 3 zu verstellen, wenn die Relativbewegung zwischen dem Verstellhebel 6 und dem Schwenkhebel 1 den Leerhub der Verstelleinrichtung überschreitet. Der Verstellhebel 6 ist mit einem Fixpunkt 7 des Fahrzeuges verbunden. In der neutralen Stellung 0 des Schwenkhebels 1 liegt ein mit dem Gehäuse 2 fest verbundener Anschlag 8 an einer Flanke des Verstellhebels 6 an, wenn der Verstellhebel 6 zum Schwenkhebel 1 eine Winkelstellung $X_o$ einnimmt, die der Ausgangsstellung des grössten Leerhubs L des Schwenkhebels 1 entspricht. Beim Überschreiten des Leerhubs L in Richtung $L_1$, z. B. hervorgerufen durch den Verschleiss der Bremsbeläge, wird der Schwenkhebel 1 gegenüber der Bremswelle 3 in Richtung N so verstellt, dass bei neutraler Ausgangsstellung 0 des Bremshebels 1 der Abstand der Bremsbeläge von der Bremstrommel, korrigiert um den Betrag des Verschliesses, wieder einem vorgegebenen Wert (Lüftspiel) entspricht.

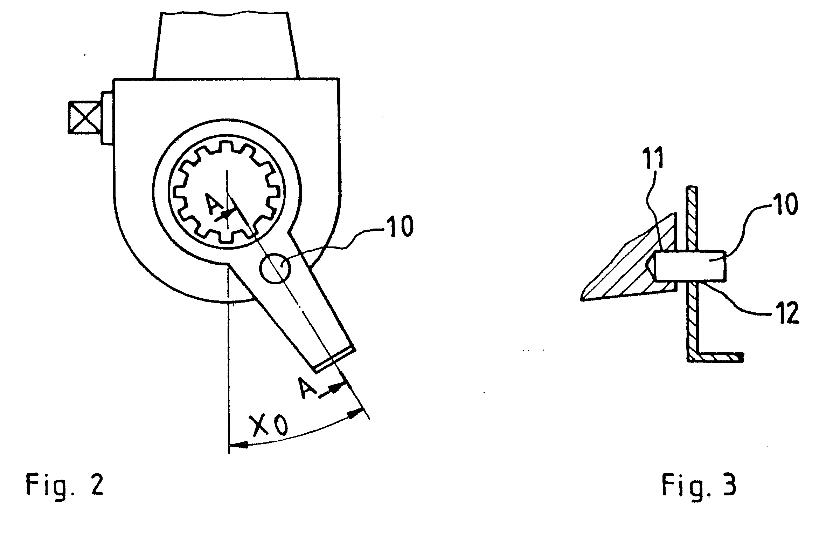

In Fig. 2 und 3 ist anstelle des Anschlages 8 ein Bolzen 10 mit Bohrungen 11, 12 im Gehäuse 2 und im Verstellhebel 6 zur Fixierung des Verstellhebels 6 in der Winkelstellung $X_o$ verwendet. Die Bohrungen 11 und 12 sind im gleichen Abstand von der Schwenkachse des Schwenkhebels 1 angeordnet, so dass sie bei der Winkelstellung $X_o$ zur Deckung kommen. Der Bolzen 10 kann nach der Justierung der Einrichtung entfernt, oder bei erstmaliger Bremsbetätigung abgeschert werden. In letzterem Fall besteht der Bolzen aus einem leicht zerstörbarem Material. Die Ausführung nach Fig. 2 und 3 hat den Vorteil, dass die Einstellung und Fixierung des Verstellhebels 6 in der Winkelstellung $X_o$ nicht am Fahrzeug vorgenommen werden muss, sondern in einer Vormontage erfolgen kann.

Die Justierung der Einrichtung wird wie folgt vorgenommen:

In einer beliebigen Montagestellung vor dem Justieren nimmt der Schwenkhebel 1 auf der Bremswelle 3 eine Stellung ein, die nicht der neutralen Ausgangsstellung 0 entspricht. Der Bremszylinder 5 befindet sich in der Grundstellung. Am Zapfen 9 des Schneckengetriebes wird von Hand der Schwenkhebel 1 gegenüber der Bremswelle 3 so verstellt, dass Montagebohrungen des Schwenkhebels 1 und des Bremszylinders 5 zur Deckung kommen und durch einen Bolzen die Gelenkverbindung 4 hergestellt werden kann. Der Verstellhegbel 6 wird bis zum Anschlag 8 verschoben. Der Fixpunkt 7 wird auf die Stellung des Verstellhebels 6 ausgerichtet. Der Verstellhebel 6 wird über den Fixpunkt 7 mit dem Fahrzeug fest verbunden.

Gemäss Fig. 2 befindet sich der Verstellhebel 6 bereits bei Beginn der Justierung in der Winkelstellung $X_o$.

Anstelle des Anschlage 8 oder des Bolzens 10 ist auch ein optischer Markierungspunkt geeignet, die Winkelstellung $X_o$ des Verstellhebels 6 erkennbar zu machen.

**Patentansprüche**

1. Einrichtung zur selbsttätigen Nachstellung des Bremsgestänges von Bremsen, mittels eines Schneckengetriebes, das in einem als Gehäuse (2) ausgebildeten Schwenkhebel (1) des Betätigungsgestänges angeordnet ist und über das die Ausgangsstellung eines Betätigungsorganes (5) der Bremse nachgestellt wird, indem eine im Gehäuse (2) des Schwenkhebels (1) angeordnete Verstelleinrichtung in Wirkverbindung mit einem am Schwenkhebel (1) verschwenkbar angeordneten und an einem Fixpunkt (8) des Fahrzeugs anliegenden Verstellhebel (6) ab einem vorgegebenen, maximalen Leerhub ($X_o$) des Schwenkhebels (1) die Schneckenwelle des Schneckengetriebes über eine Freilaufeinrichtung verdreht, dadurch gekennzeichnet, dass ein mit dem Gehäuse (2) des Schwenkhebels (1) fest verbundener oder verbindbarer Anschlag (8) oder ein optischer Markierungspunkt vorgesehen ist, der zur Positionierung des Verstellhebels (6) in einer vorgegebenen Winkelstellung ($X_o$) zum Schwenkhebel (1) dient, in welcher der Schwenkhebel (1) in der Ausgangsstellung des Betätigungsorganes (5) den maximalen Leerhub (L) aufweist.

2. Einrichtung nach Anspruch 1, dadurch gekennzeichnet, dass das Gehäuse (2) des Schwenkhebels (1) sowie der Verstellhebel (6) je eine Bohrung (11, 12) aufweisen, die im gleichen Abstand von der Schwenkachse des Schwenkhebels angeordnet sind, derart, dass bei der vorgegebenen Winkelstellung ($X_o$) die Bohrungen (11, 12) des Gehäuses (2) und des Verstellhebels (6) zur Deckung kommen und in dieser Position durch einen abnehmbaren oder abscherbaren Stift (10) gehalten werden (Fig. 2 und 3).

**Claims**

1. Device for automatically adjusting the brake linkage of brakes by means of a worm gear which is arranged in a housing (2) formed on a pivoted lever (1) of the actuating linkage and by means of which the initial position of an actuating member (5) of the brake is adjusted, by using an adjusting device, arranged in the housing (2) on the pivoted lever (1), in effective connection with an adjusting lever (6) pivotally arranged on the pivoted lever (1) and resting against a fixed point (8) on the vehicle, to rotate the worm shaft of the worm gear from a prescribed maximum idle travel ($X_o$) of the pivoted lever (1) by way of a freewheel device, characterised in that a stop means (8), fixedly connected or connectable to the housing (2) on the pivoted lever (1), or an optical marking point, is provided which serves to position the adjusting lever (6) at a prescribed angular position ($X_o$) to the pivoted lever (1), in which the pivoted lever (1) has the maximum idle travel (L) in the initial position of the actuating member (5).

2. Device according to Claim 1, characterised in that the housing (2) of the pivoted lever (1) and the adjusting lever (6) each have a bore-hole (11, 12), which bore-holes are arranged at the same distance from the pivot axis of the pivoted lever, such that in the prescribed angular position ($X_o$) the bore-holes (11, 12) of the housing (2) and of the adjusting lever (6) coincide and are held in this position by a removable or shearable pin (10) (Fig. 2 and 3).

**Revendications**

1. Dispositif de rattrapage automatique du réglage de la tringlerie de freins, au moyen d'un mécanisme de transmission à vis sans fin qui est agencé dans un levier pivotant (1) de la tringlerie d'actionnement, aménagé en tant que boîtier (2), ce mécanisme rétablissant la position initiale d'un organe d'actionnement (5) des freins par le fait qu'un dispositif de réglage agencé dans le boîtier (2) du levier pivotant (1) réalise, en étant fonctionnellement lié à un levier de réglage (6) monté à pivotement sur le levier pivotant et adjacent à un point fixe (8) du véhicule, un mouvement de rotation de l'arbre du mécanisme de transmission à vis sans fin, cela par l'intermédiaire d'un dispositif à roue libre, à partir d'une course à vide maximale ($X_o$) prédéterminée du levier pivotant (1), caractérisé par le fait qu'il est prévu un point de repère optique ou une butée (8) solidarisée, ou capable d'être solidarisée, au boîtier (2) du bras pivotant (1), ce point ou cette butée servant au positionnement du levier de réglage (6) à une position angulaire prédéterminée ($X_o$) par rapport au levier pivotant (1), position dans laquelle le levier pivotant (1) présente la course à vide maximale (L), lorsque l'organe d'actionnement (5) est en position initiale.

2. Dispositif selon la revendication 1, caractérisé par le fait que le carter (2) du levier pivotant (1) ainsi que le levier de réglage (6) présentent chacun un trou (11, 12), lesquels trous sont situés à la même distance de l'axe de pivotement du levier pivotant, de façon que, pour la position angulaire prédéterminée ($X_o$), les trous (11, 12) du boîtier (2) et du levier de réglage (6) soient alignés et soient maintenus dans cette position par une goupille amovible ou cisaillable (10). (Figures 2 et 3.)

Fig. 2

Fig. 3